# FASCICULE DE BREVET EUROPEEN

(11) **EP 0 546 142 B1**
(45) Date de publication et mention de la délivrance du brevet: **23.08.1995**
(21) Numéro de dépôt: 92913631.5
(22) Date de dépôt: 25.06.1992
(51) Int. Cl.: G01V 3/24, E21B 47/12

(54) **SYSTEME DE TRANSMISSION PLURIDIRECTIONNELLE D'INFORMATIONS ENTRE AU MOINS DEUX UNITES D'UN ENSEMBLE DE FORAGE**
SYSTEM FUER MEHRRICHTUNGSUEBERTRAGUNG VON DATEN ZWISCHEN WENIGSTENS ZWEI EINHEITEN EINER BOHRANORDNUNG
SYSTEM FOR MULTIDIRECTIONAL INFORMATION TRANSMISSION BETWEEN AT LEAST TWO UNITS OF A DRILLING ASSEMBLY

(30) Priorité: 28.06.1991 FR 9108099
(43) Date de publication de la demande: 16.06.1993
(73) Titulaire: ELF AQUITAINE PRODUCTION, 92400 Courbevoie (FR)
(72) Inventeur: HENNEUSE, Henry, F-64140 Billère (FR)
(74) Mandataire: Timoney, Ian Charles Craig
(86) Numéro de dépôt international: FR9200579
(87) Numéro de publication internationale: WO9300597

(56) Documents cités:
- EP-A- 0 108 903
- GB-A- 2 115 554
- US-A- 3 737 845
- US-A- 3 828 313
- US-A- 3 959 767
- US-A- 4 593 559
- US-A- 4 620 189
- US-A- 5 008 664

## Description

La présente invention a pour objet un système de transmission pluridirectionnelle d'informations entre au moins deux unités d'un ensemble de forage, et plus particulièrement par l'intermédiaire d'un lien électrique situé le long de la garniture de forage.

Depuis de nombreuses années, les sociétés pétrolières dotent les garnitures de forage de divers outils de fond qui fournissent, en cours de forage et sans interrompre celui-ci, différentes mesures propres à la conduite d'une déviation ou à l'évaluation des couches traversées et, plus récemment, des données telles que le couple et le poids transmis à l'outil ainsi qu'une appréciation du comportement vibratoire de la garniture et de l'outil perçu au fond.

Cependant, la portée technologique de certains de ces outils reste limitée ; en effet, les techniques actuelles de transmission d'information, en cours de forage, par envoi d'impulsions dans la boue ou par émission d'ondes électromagnétiques n'autorisent qu'un faible débit de données du fond vers la surface, ce qui réduit considérablement le développement d'outils plus sophistiqués.

Toutefois, depuis plusieurs années, l'industrie pétrolière commence à utiliser des liens électriques disposés, depuis la surface jusqu'au fond du puits, le long du train de tiges, et destinés entre autre à assurer l'alimentation d'un moteur situé au fond. De tels liens sont décrits dans les documents suivants : US 3.378.811, US 3.518.608, US 3.696.332, US 3.807.502, US 3.825.078.

Le document US-A-4620189 décrit un système de transmission d'informations, du fond d'un puits à la surface, au moyen d'un lien électrique destiné à alimenter une pompe disposée au fond du puits.

La présente invention a ainsi pour objet un système de transmission pluridirectionnelle entre au moins deux unités d'un ensemble de forage, cette transmission s'effectuant entre fond et surface le long d'un lien électrique.

Pour ce faire, l'invention propose un système de transmission d'informations entre au moins deux unités d'un ensemble de forage par l'intermédiaire d'un lien électrique permettant une transmission pluridirectionnelle entre les unités, une des unités comprenant un outil disposé au fond d'une garniture de forage, le lien électrique étant situé le long de la garniture, caractérisé en ce que l'une desdites unités constitue un serveur destiné à gérer l'ordre des échanges d'information entre unités.

D'autres caractéristiques et avantages de la présente invention apparaîtront plus clairement à la lecture de la description ci-après faite en référence aux dessins annexés sur lesquels :
- la figure 1 représente une vue d'ensemble du système de transmission pluridirectionnelle selon l'invention ; et
- la figure 2 représente schématiquement un circuit électronique utilisé dans le système de la figure 1.

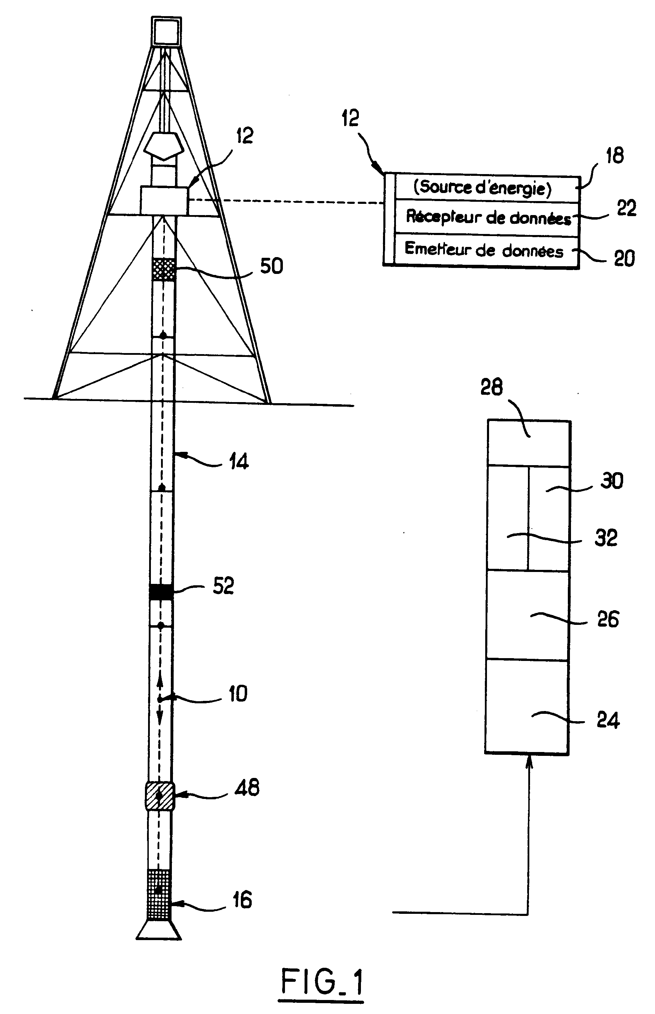

Comme représenté sur la figure 1, le système de transmission comporte un lien électrique 10 établi entre un collecteur tournant 12 disposé au sommet d'une garniture de forage 14 et un outil 16 situé au fond de la garniture 14, le collecteur tournant 12 assurant une continuité électrique entre la garniture en mouvement, une source d'énergie 18, un émetteur de données de surface 20 et un récepteur de données provenant du fond 22. L'outil de fond 16 comprend des organes de mesures 24 telles que des jauges de contrainte ou des accéléromètres, des moyens de traitement 26, un séparateur entre énergie et information 28, un émetteur de données de fond 30 et un récepteur des données de surface 32.

Afin de permettre une transmission pluridirectionnelle de l'énergie et de l'information entre le fond et la surface, ou tout point intermédiaire, le présent système comprend les caractéristiques suivantes :
- l'énergie est transmise par l'intermédiaire du lien électrique 10 depuis la source 18 jusqu'au séparateur 28 qui permet l'alimentation de l'outil de fond 16,
- l'information provenant du fond est fournie par les organes de mesures 24, traitée par les moyens de traitement 26 puis transmise par l'intermédiaire du lien électrique 10 depuis l'émetteur de données de fond 30 jusqu'au récepteur des données de fond situé en surface 22,
- l'information provenant de la surface est transmise vers le fond par l'intermédiaire du lien électrique 10 depuis l'émetteur de données de surface 20 jusqu'au récepteur des données de surface situé au fond 32.

Quelle que soit la nature du lien électrique existant entre le fond et la surface, le présent système de transmission possède les capacités suivantes :
- il permet d'assurer une transmission complète ou sélective jusqu'à la surface des mesures provenant du fond du puits et ce quelle qu'en soit la nature, tels le couple, le poids sur l'outil, la tension ou l'intensité du moteur de fond, azimut de l'outil ... De plus, l'utilisateur est à même de recevoir des accusés de réception signifiant que ses ordres ont été exécutés par l'outil de fond ou que ses propres messages sont erronés ; enfin, l'outil de fond est capable de transmettre à l'utilisateur un diagnostic en cas de défaillance partielle,
- il permet à l'utilisateur de mettre en oeuvre les opérations qui lui semblent nécessaires, soit la mise en service ou veille à distance, soit également le paramétrage, à savoir le choix des voies de mesure dont on souhaite recueillir les données en surface, et le réglage des étages de conditionnement tels que les amplificateurs à gain programmable dans le but d'améliorer les rapports entre signal et bruit, et soit enfin la téléprogrammation, c'est-à-dire le téléchargement d'une partie ou de l'intégralité des codes machines propres aux processeurs, unités centrales ou processeurs de signaux, le déclenchement de traitements préprogrammés, les interventions sur le contexte multi-tâches ou la télé-maintenance.

Ainsi, un tel système permet un contrôle sur l'ensemble du puits ainsi que la correction des erreurs de transmission, une interactivité entre l'utilisateur et l'outil de fond, ou tout point intermédiaire, à savoir que l'utilisateur peut solliciter à tout moment une mesure ou un traitement particulier ; l'optimisation du canal de transmission puisqu'une dégradation dudit canal n'empêche pas la poursuite des échanges ; une amélioration de la fiabilité par commutation d'organes redondants ainsi qu'une simplicité et une efficacité accrues dans la mise en oeuvre étant donné que tout réglage peut être effectué en conditions de fond.

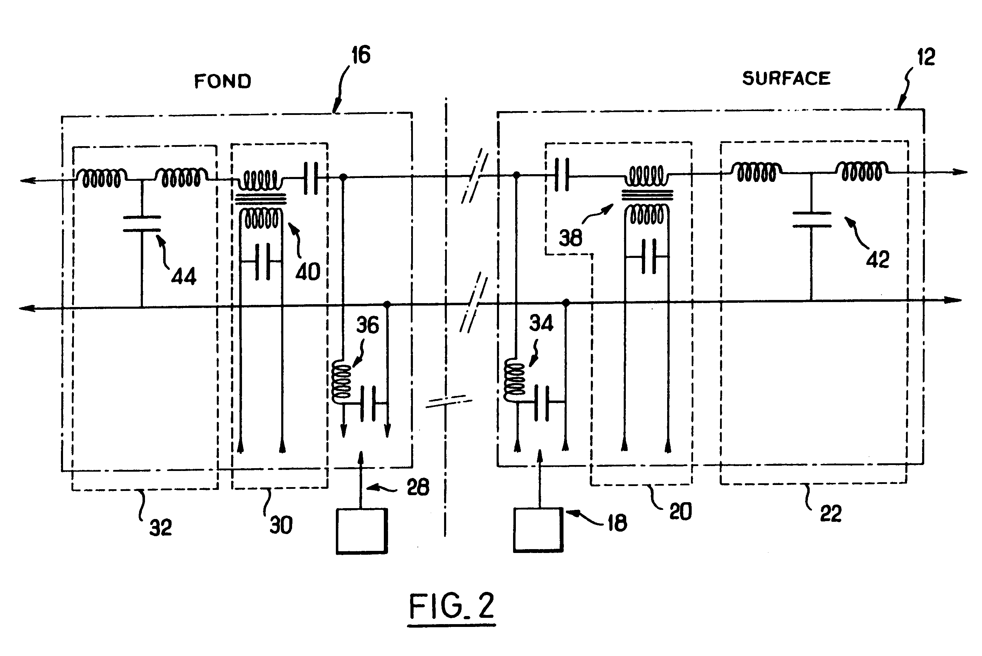

Comme représenté sur la figure 2, la source d'énergie 18 en surface ainsi que la charge 28 sont chacune reliées au lien électrique au travers d'un filtre réjecteur respectivement 34 et 36 ; les récepteurs de données de fond 22 et de surface 32 sont chacun munis d'un filtre passe-bande respectivement 42 et 44 ; les émetteurs des données de surface 20 et de fond 30 sont couplés au lien électrique par le biais d'un circuit couplé sélectif comprenant un transformateur d'isolement assurant de surcroît une adaptation d'impédance, respectivement 38 et 40.

L'émetteur des données de surface 20 transmet des informations sous forme électrique au moyen du transformateur 38 et par l'intermédiaire du lien électrique 10 situé dans la garniture de forage 14, lesdites informations étant émises à une fréquence dite de surface Fs et étant recueillies au niveau du récepteur 32 qui est accordé à la fréquence Fs. L'émetteur des données de fond 30 émet des informations à la fréquence dite de fond Ff, lesdites informations étant recueillies au niveau du récepteur 22 qui est accordé à la fréquence de fond Ff. De plus, l'émetteur 20 et le récepteur 32 des données de surface sont munis de filtres 38 et 44 réjecteurs de la fréquence de fond Ff alors que l'émetteur 30 et le récepteur 22 des données de fond sont munis de filtres 42 et 40 réjecteurs de la fréquence de surface Fs.

La source 18 transmet l'énergie par l'intermédiaire du lien électrique 10 jusqu'au séparateur énergie-information 28, ladite énergie étant constituée par un courant continu ou alternatif de fréquence a priori inférieure à Fs et Ff. Dans les deux cas, la source 18 et le séparateur 28 sont munis de filtres 34 et 36 réjecteurs des fréquences de surface Fs et de fond Ff.

Ainsi, chaque unité est affectée d'une fréquence d'émission et de réception propre, ce qui a pour effet d'empêcher au maximum toute interférence.

On peut également attribuer à l'ensemble du système une seule fréquence de communication et affecter à chaque unité une adresse propre.

On peut également généraliser ce système de transmission, en l'appliquant à plusieurs points situés où que ce soit sur la garniture, voire même sur le chantier. Toutefois, un tel système serait beaucoup trop complexe à gérer si l'on attribuait à chaque unité une fréquence d'émission et de réception propre ; c'est pourquoi on ne retient qu'une seule fréquence de communication pour l'ensemble du système alors que chaque unité est affectée d'une adresse propre.

Dans l'exemple illustré sur la figure 1, le système comprend cinq sous-ensembles, à savoir un collecteur tournant 12, un outil de fond 16, un moteur 48, une valve 50 et un appareil 52 permettant la connexion et la déconnexion de tout outil se trouvant dans le puits, à chacun desdits sous-ensembles étant attribuée une adresse.

Il est alors nécessaire de munir le système d'un serveur de surface dont le rôle est d'émettre des messages comprenant l'adresse du destinataire et d'accorder éventuellement audit destinataire un temps de réponse durant lequel toutes les unités y compris le serveur ont l'interdiction d'émettre.

L'homme de l'art dispose de nombreuses autres possibilités de réaliser un tel système de transmission, comme l'attribution d'une fréquence porteuse annexe réservée à la mesure. Ainsi, un tel système offre la possibilité de télécommander tout équipement amené à être introduit dans la garniture pour y réaliser une opération particulière. On peut appliquer ce système à la conduite d'un moteur de fond électrique et au suivi de son comportement, au pilotage d'une vanne électrique, à la commande d'un appareil assurant la mise en place ou le retrait de tout élément se trouvant dans la garniture, ainsi qu'aux échanges interactifs avec un outil de mesure de fond.

## Revendications

1. Système de transmission d'informations entre au moins deux unités d'un ensemble de forage par l'intermédiaire d'un lien électrique permettant une transmission pluridirectionnelle entre les unités, une des unités comprenant un outil disposé au fond d'une garniture de forage, le lien électrique étant situé le long de la garniture, caractérisé en ce que l'une desdites unités constitue un serveur destiné à gérer l'ordre des échanges d'information entre unités.

2. Système selon la revendication 1, caractérisé en ce que au moins deux unités autres que le serveur peuvent échanger des informations.

3. Système selon la revendication 1 ou 2, caractérisé en ce que le serveur comprend un émetteur de données, un récepteur de données et une source lui permettant d'envoyer de l'énergie à chacune des autres unités.

4. Système selon la revendication 1 ou 2, caractérisé en ce que chaque unité autre que le serveur comprend un émetteur de données, un récepteur de données et un séparateur énergie-information.

5. Système selon la revendication 1 ou 2, caractérisé en ce que chaque sous-ensemble possède une fréquence d'émission et une fréquence de réception propre.

6. Système selon l'une des revendications 1 à 3, caractérisé en ce que chaque émetteur et chaque récepteur possèdent des moyens leur permettant de rejeter les fréquences pour lesquelles ils ne sont pas accordés.

7. Système selon l'une des revendications 1 à 3, caractérisé en ce que la source émet de l'énergie soit sous forme d'un courant continu, soit sous forme d'un courant alternatif à une fréquence différente de chacune des fréquences d'émission et de réception de chaque unité.

8. Système selon l'une des revendications 1 à 4, caractérisé en ce que la source d'énergie et le séparateur énergie - information possèdent des moyens leur permettant de rejeter les fréquences pour lesquelles ils ne sont pas accordés.

9. Système selon l'une des revendications 1 à 8, caractérisé en ce que chaque unité est affectée d'une adresse propre.

## Claims

1. System for transmitting information between at least two units of a drilling assembly via an electrical link permitting pluridirectional transmission between the units, one of the units comprising a tool arranged at the base of a drilling fitting, and the electrical link being arranged along the fitting, characterised in that one of the said units constitutes a server for managing the order of the exchanges of information between units.

2. System according to Claim 1, characterised in that at least two units other than the server can exchange information.

3. System according to Claim 1 or 2, characterised in that the server comprises a data transmitter, a data receiver and a source enabling it to send energy to each of the other units.

4. System according to Claim 1 or 2, characterised in that each unit other than the server comprises a data transmitter, a data receiver and an energy-information separator.

5. System according to Claim 1 or 2, characterised in that each sub-assembly has its own transmission frequency and its own receiving frequency.

6. System according to any one of Claims 1 to 3, characterised in that each transmitter and each receiver has means enabling them to reject the frequencies to which they are not tuned.

7. System according to any one of Claims 1 to 3, characterised in that the source transmits energy either in the form of a direct current or in the form of an alternating current at a frequency that differs from each of the transmission and receiving frequencies of each unit.

8. System according to any one of Claims 1 to 4, characterised in that the energy source and the energy-information separator have means enabling them to reject the frequencies to which they are not tuned.

9. System according to any one of Claims 1 to 8, characterised in that each unit is allocated its own address.

## Patentansprüche

1. System zur Übertragung von Information zwischen mindestens zwei Einheiten eines Bohrgestänges durch Zwischenschaltung einer elektrischen Verbindung, durch die eine mehrdirektionale Übertragung zwischen den Einheiten ermöglicht wird, wobei eine der Einheiten ein am unteren Ende eines Bohrgestänges angeordnetes Bohrwerkzeug umfaßt und die elektrische Verbindung entlang des Bohrgestänges angeordnet ist,
dadurch gekennzeichnet, daß
eine der Einheiten ein Server ist, der die Abfolge des Informationsaustausches zwischen den Einheiten regelt.

2. System nach Anspruch 1, dadurch gekennzeichnet, daß mindestens zwei Einheiten, von denen keine der Server ist, Informationen austauschen können.

3. System nach Anspruch 1 oder 2, dadurch gekennzeichnet, daß der Server folgende Einrichtungen aufweist: einen Datensender, einen Datenempfänger und eine Quelle, die es ihm ermöglicht, jede der anderen Einheiten mit Energie zu versorgen.

4. System nach Anspruch 1 oder 2, dadurch gekennzeichnet, daß jede Einheit außer dem Server folgende Einrichtungen aufweist: einen Datensender, einen Datenempfänger und eine Energie-Information-Trenneinrichtung.

5. System nach Anspruch 1 oder 2, dadurch gekennzeichnet, daß jede Untereinheit eine eigene Sende- und Empfangsfrequenz hat.

6. System nach einem der Ansprüche 1 bis 3, dadurch gekennzeichnet, daß jeder Sender und jeder Empfänger eine Einrichtung aufweist, die es ihm ermöglicht, die Frequenzen zurückzuweisen, auf die er nicht abgeglichen ist.

7. System nach einem der Ansprüche 1 bis 3, dadurch gekennzeichnet, daß die Quelle Energie entweder als Gleichstrom oder als Wechselstrom mit einer Frequenz aussendet, die sich von der Sende- bzw. der Empfangsfrequenz einer jeden Einheit unterscheidet.

8. System nach einem der Ansprüche 1 bis 4, dadurch gekennzeichnet, daß sowohl die Energiequelle als auch die Energie-Information-Trenneinrichtung eine Einrichtung aufweist, die es ihr ermöglicht, die Frequenzen zurückzuweisen, auf die sie nicht abgeglichen ist.

9. System nach einem der Ansprüche 1 bis 8, dadurch gekennzeichnet, daß jeder Einheit eine eigene Adresse zugeordnet ist.
